# EUROPEAN PATENT APPLICATION

(11) **EP 2 684 455 A1**
(43) Date of publication of application: **15.01.2014**
(21) Application number: 12755321.2
(22) Date of filing: 06.03.2012
(51) Int. Cl.: A01N 43/66, A01N 25/04, A01N 43/54, A01N 47/36, A01P 13/02

(54) **METHOD FOR CONTROLLING WEED IN WET RICE CULTIVATION**

(30) Priority: 07.03.2011 JP 2011049382
(71) Applicant: Sumitomo Chemical Company Limited, Tokyo 104-8260 (JP)
(72) Inventor: IKEDA, Hajime, Kasai-shi Hyogo 6752333 (JP); INABA, Junko, Takarazuka-shi Hyogo 665-8555 (JP)
(74) Representative: Vossius & Partner
(86) International application number: PCT/JP2012/055605
(87) International publication number: WO 2012/121227

(57) **Abstract**

The present invention provides a method for controlling weeds in paddy rice cultivation, which comprises steps of:
applying a water-diluted solution comprising a herbicidal compound such as 1-(2-chloro-6-propylimidazo[1,2-*b*]pyridazin-3-ylsulfonyl)-3-(4,6-dimethoxypyrimidin-2-yl)urea to a paddy field; and
flooding the paddy field within the first week after the application of the herbicidal compound.

## Description

### TECHNICAL FIELD

The present invention relates to a method for controlling weeds in paddy rice cultivation.

### BACKGROUND ART

Many herbicidal compounds have been known as an active ingredient of herbicides for controlling weeds, but the performance of the herbicidal compound is not always utilized fully, depending on how to use the herbicides (see Non-patent document 1).

### CITATION LIST

### (Non-patent document)

Non-patent document 1: Crop Protection Handbook, vol. 95 (2009)

### SUMMARY OF THE INVENTION

### (PROBLEMS TO BE SOLVED BY INVENTION)

An object of the present invention is to provide a method for controlling weeds in paddy rice cultivation, having an excellent effect on controlling weeds.

### (MEANS TO SOLVE PROBLEMS)

The present inventors have studied to find out a method for controlling plants that adversely affect crops in paddy rice cultivation (that is, weeds), having an excellent effect on controlling weeds, and then they have found that a specific water control in a paddy field after treatment with (that is, application of) certain types of herbicidal compound has an excellent effect on controlling weeds which grow in the paddy field, and thereby they have completed the present invention.

The present invention provides the following aspects.

[1] A method for controlling weeds in paddy rice cultivation, which comprises steps of:
   after sowing paddy rice seeds or transplanting paddy rice plants in a paddy field, applying a water-diluted solution comprising one or more herbicidal compounds selected from the group consisting of
      1-(2-chloro-6-propylimidazo[1,2-*b*]pyridazin-3-ylsulfonyl)-3-(4,6-dimethoxypyrimidin-2-yl)urea,
      (*RS*)-2'-[(4,6-dimethoxypyrimidin-2-yl)(hydroxy)methyl]-1,1-difluoro-6'-(methoxymethyl)methanesulfonanilide,
      1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
      2'-[(4,6-dimethoxy-1,3,5-triazin-2-yl)carbonyl]-1,1,6'-trifluoro-*N*-methylmethanesulfonanilide to the weeds or the paddy field where weeds grow or are to emerge; and
   flooding the paddy field within the first week after the application of the herbicidal compound.

[2] A method for controlling weeds in paddy rice cultivation, which comprises steps of:
after sowing paddy rice seeds or transplanting paddy rice plants in a paddy field, applying a water-diluted solution comprising one or more herbicidal compounds selected from the group consisting of
   1-(2-chloro-6-propylimidazo[1,2-*b*]pyridazin-3-ylsulfonyl)-3-(4,6-dimethoxypyrimidin-2-yl)urea,
   (*RS*)-2'-[(4,6-dimethoxypyrimidin-2-yl)(hydroxy)methyl]-1,1difluoro-6'-(methoxymethyl)methanesulfonanilide,
   1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
   2'-[(4,6-dimethoxy-1,3,5-triazin-2-yl)carbonyl]-1,1,6'-trifluoro-*N*-methylmethanesulfonanilide, to the weeds or the paddy field where weeds grow or are to emerge; and
flooding the paddy field until the first three days after the application of the herbicidal compound.

[3] A method for controlling weeds in paddy rice cultivation, which comprises steps of:
after sowing paddy rice seeds or transplanting paddy rice plants in a paddy field, applying a water-diluted solution comprising one or more herbicidal compounds selected from the group consisting of
   1-(2-chloro-6-propylimidazo[1,2-*b*]pyridazin-3-ylsulfonyl)-3-(4,6-dimethoxypyrimidin-2-yl)urea,
   (*RS*)-2'-[(4,6-dimethoxypyrimidin-2-yl)(hydroxy)methyl]-1,1-difluoro-6'-(methoxymethyl)methanesulfonanilide,
   1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
   2'-[(4,6-dimethoxy-1,3,5-triazin-2-yl)carbonyl]-1,1,6'-trifluoro-*N*-methylmethanesulfonanilide, to the weeds or the paddy field where weeds grow or are to emerge; and
flooding the paddy field until the next day of the application of the herbicidal compound.

[4] The method according to any one of [1] to [3] wherein the herbicidal compound is 1-(2-chloro-6-propylimidazo[1,2-b]pyridazin-3-ylsulfonyl)-3-(4,6-dimethoxypyrimidin-2-yl)urea.

[5] The method according to any one of [1] to [3] wherein the herbicidal compound is (*RS*)-2'-[(4,6-dimethoxypyrimidin-2-yl)(hydroxy)methyl]-1,1-difluoro-6'-(methoxymethyl)methanesulfonanilide.

[6] The method according to any one of [1] to [3] wherein the herbicidal compound is 1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea.

[7] The method according to any one of [1] to [3] wherein the herbicidal compound is 2'-[(4,6-dimethoxy-1,3,5-triazin-2-yl)carbonyl]-1,1,6'-trifluoro-N-methylmethanesulfonanilide.

[8] The method according to any one of [1] to [7] wherein the paddy field is flooded to a depth of less than 1 cm in the step of applying a water-diluted solution comprising a herbicidal compound to the paddy field.

[9] The method according to any one of [1] to [8] wherein the paddy field is flooded to a depth of 4 cm or more in the step of flooding the paddy field.

[10] The method according to any one of [1] to [9] wherein the weeds in paddy rice cultivation are *Echinochloa* weeds.

[11] The method according to any one of [1] to [9] wherein the weeds in paddy rice cultivation is *Leptochloa chinenisis.*

[12] A formulation used in the method according to any one of [1] to [3] and [8] to [11], comprising one or more herbicidal compounds selected from the group consisting of
1-(2-chloro-6-propylimidazo[1,2-*b*]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide.

[13] The formulation according to [12] wherein the herbicidal compound is 1-(2-chloro-6-propylimidazo[1,2-*b*]pyridazin-3-ylsulfonyl)-3-(4,6-dimethoxypyrimidin-2-yl)urea.

[14] The formulation according to [12] wherein the herbicidal compound is (*RS*)-2'-[(4,6-dimethoxypyrimidin-2-yl)(hydroxy)methyl]-1,1-difluoro-6'-(methoxymethyl)methanesulfonanilide.

[15] The formulation according to [12] wherein the herbicidal compound is 1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea.

[16] The formulation according to [12] wherein the herbicidal compound is 2'-[(4,6-dimethoxy-1,3,5-triazin-2-yl)carbonyl]-1,1,6'-trifluoro-*N*-methylmethanesulfonanilide.

### (Effect of the Invention)

The method for controlling weeds of the present invention controls weeds in a paddy field of paddy rice cultivation effectively.

### DESCRIPTION OF EMBODIMENTS

The method for controlling weeds of the present invention (hereinafter referred to as "the method of the present invention") comprises the following steps (1) and (2):
Step (1) after sowing paddy rice seeds or transplanting paddy rice plants in a paddy field, applying a water-diluted solution comprising one or more herbicidal compounds selected from the group consisting of
   1-(2-chloro-6-propylimidazo[1,2-*b*]pyridazin-3-ylsulfonyl)-3-(4,6-dimethoxypyrimidin-2-yl)urea,
   (*RS*)-2'-[(4,6-dimethoxypyrimidin-2-yl)(hydroxy)methyl]-1,1-difluoro-6'-(methoxymethyl)methanesulfonanilide,
   1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
   2'-[(4,6-dimethoxy-1,3,5-triazin-2-yl)carbonyl]-1,1,6'-trifluoro-*N*-methylmethanesulfonanilide,
   to the weeds or the paddy field where weeds grow or are to emerge, wherein the paddy field is preferably flooded to a depth of less than 1 cm; and
Step (2) flooding the paddy field to which the herbicidal compound has been applied to a depth of 4 cm or more within the first week after the treatment with (that is, the application of) the herbicidal compound.

A method of the present invention provides Step (1) after sowing paddy rice seeds or transplanting paddy rice plants in a paddy field, applying a water-diluted solution comprising one or more herbicidal compounds selected from the group consisting of
1-(2-chloro-6-propylimidazo[1,2-*b*]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide to the weeds or the paddy field where weeds grow or are to emerge.
1-(2-Chloro-6-propylimidazo[1,2-b]pyridazin-3-ylsulfonyl)-3-(4,6-dimethoxypyrimidin-2-yl)urea used in the method of the present invention (hereinafter referred to as "Compound 1") can be prepared according to a production method described in JP-2004-123690-A.
(*R,S*)-2'-[(4,6-Dimethoxypyrimidin-2-yl)(hydroxy)methyl]-1,1-difluoro-6'-(methoxymethyl)methanesulfonanilide (hereinafter referred to as "Compound 2") can be prepared according to a production method described in JP-2004-44546-A.
1-{3-Chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea (hereinafter referred to as "Compound 3") can be prepared according to a production method described in JP-2005-336175-A.
2'-[(4,6-Dimethoxy-1,3,5-triazin-2-yl)carbonyl]-1,1,6'-trifluoro-N-methylmethanesulfonanilide (hereinafter referred to as "Compound 4") can be prepared according to a production method described in WO2007/031208.

A herbicidal compound used in the method of the present invention can be formulated into a conventional form of agricultural chemicals, for example, emulsifiable concentrate, wettable powder, flowable, dry flowable, granule, and the like, by dissolving or dispersing the above-mentioned active ingredient in a suitable liquid carrier or by mixing the active ingredient with a suitable solid carrier or absorbing the active ingredient into a suitable solid carrier. Such formulations can be prepared according to a conventional method and may optionally further comprise emulsifying agents, dispersing agents, spreading agents, penetrating agents, wetting agents, thickeners, stabilizers, and the like.

Examples of the liquid carrier (solvents) used in preparing a formulation of a herbicidal compound used in the present invention include: water; alcohols (for example, methanol, ethanol, 1-propanol, 2-propanol, and ethylene glycol); ketones (for example, acetone and methyl ethyl ketone); ethers (for example, dioxane, tetrahydrofuran, ethylene glycol monomethyl ether, diethylene glycol monomethyl ether, and propylene glycol monomethyl ether); aliphatic hydrocarbons (for example, kerosene, fuel oil, and machine oil); aromatic hydrocarbons (for example, benzene, toluene, xylene, solvent naphtha, and methylnaphthalene); halogenated hydrocarbons (for example, dichloromethane, chloroform, and carbon tetrachloride); acid amides (for example, dimethylformamide, and dimethylacetamide); esters (for example, ethyl acetate, butyl acetate, and glyceryl fatty acid ester); nitriles (for example, acetonitrile and propionitrile); and the like. A mixture comprising two or more of such liquid carriers in proper proportions may also be used.

Examples of the solid carrier (diluents · expanders) include plant powders (for example, soy flour, tobacco powder, wheat flour, and wood flour), mineral powder (for example, clays such as kaolin, bentonite, acid clay, and clay; talcs such as talc powder and agalmatolite powder; silica such as diatomaceous earth and mica powder), alumina, sulfur powder, active charcoal, and the like. A mixture comprising two or more of such solid carriers in proper proportions may also be used.

In a formulation, each amount of the liquid carrier or the solid carrier may be in the range of usually about 1 to 99 % by weight, preferably about 1 to 80 % by weight.

Examples of a surfactant which may be used as an emulsifying agent, a spreading agent, a penetrating agent, a dispersing agent, etc. in a formulation of a herbicidal compound used in the method of the present invention include a nonionic surfactant and an anionic surfactant.

Typical examples of such surfactants include soap, polyoxyethylene alkyl aryl ethers (for example, NOIGEN and EA 142 produced by Dai-ichi Kogyo Seiyaku Co., Ltd.), polyoxyethylene aryl esters (for example, Nonal produced by TOHO CHEMICAL INDUSTRY Co., Ltd.), alkyl sulfates (for example, Emal 10 and Emal 40 produced by Kao Corporation), alkylbenzenesulfonates (for example, Neogen and Neogen T produced by Dai-ichi Kogyo Seiyaku Co.,Ltd., Neopelex produced by Kao Corporation), polyethylene glycol ethers (for example, Nonipol 85, Nonipol 100, and Nonipol 160 produced by Sanyo Chemical Industries, Ltd.), polyhydric alcohol esters (for example, Tween 20 and Tween 80 produced by Kao Corporation). In the formulation, an amount of the surfactant may be in the range of usually about 0.1 to 50 % by weight, preferably about 0.1 to 25 % by weight.

In the formulation used in the method of the present invention, an amount of the herbicidal compound is in the range of usually about 0.01 to 90 % by weight. The formulation of the herbicidal compound used in the present invention is appropriately diluted with water and the like when using to increase the volume (for example, 100 to 100,000-fold dilution), and then sprayed with a sprayer.

In the method of the present invention, the herbicidal compound is usually applied in a paddy field after directly sowing rice seeds on a flooded paddy field, after directly sowing rice seeds on a well-drained paddy field, or after transplanting rice plants.

A timing of applying the herbicidal compound may be any timing within a range of a timing from soon after sowing paddy rice seeds or transplanting paddy rice plants to 21 days after sowing paddy rice seeds or transplanting paddy rice plants, preferably a timing from 3 days after sowing paddy rice seeds or transplanting paddy rice plants to 21 days after sowing paddy rice seeds or transplanting paddy rice plants, more preferably a timing from 5 days after sowing paddy rice seeds or transplanting paddy rice plants to 21 days after sowing paddy rice seeds or transplanting paddy rice plants.

When the herbicidal compound used in the present invention is applied, the paddy field may be in a condition where a soil surface of the paddy field is dry, may be in a condition where the soil surface of the paddy field is wet but drained (*i.e.* the depth of water is 0 cm), or may be flooded to a depth not causing a difficulty in applying the herbicide with a sprayer. The depth not causing a difficulty in applying the herbicide with a sprayer may vary depending on a subjective view or an experience of a person who applies the herbicide, but may be in a range of less than 5 cm, preferably less than 2 cm, and more preferably less than 1 cm.

In the method of the present invention, an applied amount of the herbicidal compound may vary depending on place of application, timing of application, mode of application, or the kind of weeds to be applied.
Usually, an amount of the active ingredient may be in a range of about 5 g to 400 g, preferably about 10 g to 200 g, and more preferably about 20 g to 100 g per 1 hectare of paddy field.

The herbicidal compound used in the method of the present invention may be used as a mixture with other herbicide as needed, and may also be used in combination with an insecticide, a fungicide, a plant growth regulator, a fertilizer, a safener, a soil conditioner, and the like.

A method of the present invention also provides Step (2) flooding the paddy field within the first week after the treatment with (that is, application of) the herbicidal compound, wherein the paddy field have been treated (that is, applied) with once or more herbicidal compounds selected from the group consisting of
1-(2-chloro-6-propylimidazo[1,2-*b*]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide.

In the method of the present invention, the timing of flooding the paddy field after applying the herbicidal compound to the paddy field is within a range of a timing within the first week after the application of the herbicidal compound, preferably a timing within the first three days after the application of the herbicidal compound, more preferably a timing until the next day of the application of the herbicidal compound.

In the method of the present invention, a depth to which the paddy field is flooded after the application of the herbicidal compound to the paddy field include, but are not limited to, a range of, for example, 4 cm or more, preferably 4 cm to 20 cm, and more preferably 4 cm to 10 cm.

A paddy rice cultivated in a paddy field in which the method of the present invention is used (that is, rice) refers to *Oryza sativa* and *Oryza glaberrima,* which are cultivated species of an annual plant of Oryza. A paddy rice for which the method of the present invention is used is not limited to any kind of breed of paddy rice so long as said breed of paddy rice is one usually cultivated as crop.

The above-mentioned breed of a plant includes a plant on which tolerance to 4-hydroxyphenylpyruvate dioxygenase (hereinafter abbreviated as HPPD) inhibitors such as Isoxaflutole; acetolactate synthase (hereinafter abbreviated as ALS) inhibitors such as Imazethapyr, thifensulfuron-methyl; 5-enolpyruvylshikimate-3-phosphate synthase inhibitors such as glyphosate; glutamine synthetase inhibitors such as glufosinate; auxin type herbicidal compounds such as 2,4-D, dicamba; or herbicidal compounds such as bromoxynil and the like; has been conferred by a classical breeding method or by genetic engineering techniques.

Examples of the crop on which tolerance has been conferred by a classical breeding method include rice tolerant to imidazolinone ALS inhibitory herbicidal compounds such as imazethapyr, which are already commercially available under a product name of Clearfield (registered trademark).

Examples of the crop on which tolerance has been conferred by genetic engineering techniques include rice tolerant to glufosinate, which has been developed under a product name of Liberty Link (registered trademark) Rice or LL Rice.

Also a variation of acetyl-CoA carboxylase tolerant to an acetyl-CoA carboxylase inhibitor is reported in Weed Science, vol.53, pp. 728-746 (2005) and the like, and a plant tolerant to an acetyl-CoA carboxylase inhibitor can be generated by introducing a gene of such an acetyl-CoA carboxylase variation into a plant by genetic engineering technology, or by introducing a variation conferring tolerance into a plant acetyl-CoA carboxylase. Further, plants tolerant to acetyl-CoA carboxylase inhibitors or ALS inhibitors or the like can be generated by introducing into the plant cell a nucleic acid for introduction of base-substitution variation represented by Chimeraplasty Technique (Gura T., 1999, Repairing the Genome's Spelling Mistakes., Science, 285: 316-318) to introduce a site-directed amino acid substitution variation into an acetyl-CoA carboxylase gene, an ALS gene and the like of the plant.

Crops such as soybean and the like tolerant to dicamba can be generated by introducing dicamba-degrading enzyme such as dicamba monooxygenase and the like isolated from Pseudomonas maltophilia into the plant (Behrens et al. 2007 Dicamba Resistance: Enlarging and Preserving Biotechnology-Based Weed Management Strategies. Science 316: 1185-1188).

Crop tolerant to both of the following herbicides: phenoxy acid type herbicides such as 2,4-D, MCPA, Dichlorprop, Mecoprop, and the like; and aryloxyphenoxypropionic acid type herbicide such as Quizalofop, Haloxyfop, Fluazifop, Diclofop, Fenoxaprop, Metamifop, Cyhalofop, Clodinafop, and the like; can be generated by introducing to the crops a gene encoding aryloxyalkanoate dioxygenase (WO2005/107437, WO2007/053482, WO2008/141154).

Further, a plant tolerant to HPPD inhibitors can be generated by introducing a gene encoding HPPD enzyme that is tolerant to HPPD inhibitors into the plant (US2004/0058427).

Further examples of a method for making crops tolerant to a herbicide include those described in WO98/20144, WO2002/46387, or US2005/0246800 which comprise introducing a gene into crops.

The above-mentioned crop includes also crops genetically engineered to be able to synthesize selective toxins such as those known in genus Bacillus.

Examples of toxins expressed in such genetically engineered plants include: insecticidal proteins derived from *Bacillus* cereus or *Bacillus popilliae;* δ-endotoxins derived from *Bacillus thuringiensis* such as Cry1Ab, Cry1Ac, Cry1F, Cry1Fa2, Cry2Ab, Cry3A, Cry3Bb1 and Cry9C; insecticidal proteins such as VIP1, VIP2, VIP3 or VIP3A; insecticidal proteins derived from nematodes; toxins generated by animals, such as scorpion toxin, spider toxin, bee toxin and insect-specific neurotoxins; mold fungi toxins; plant lectin; agglutinin; protease inhibitors such as a trypsin inhibitor, a serine protease inhibitor, patatin, cystatin, and a papain inhibitor; ribosome-inactivating proteins (RIP) such as lycine, corn-RIP, abrin, luffin, saporin, and briodin; steroid-metabolizing enzymes such as 3-hydroxysteroid oxidase, ecdysteroid-UDP-glucosyl transferase, and cholesterol oxidase; an ecdysone inhibitor; HMG-CoA reductase; ion channel inhibitors such as a sodium channel inhibitor and a calcium channel inhibitor; juvenile hormone esterase; a diuretic hormone receptor; stilbene synthase; bibenzyl synthase; chitinase; glucanase; and the like.

Toxins expressed in such genetically engineered crops also include: hybrid toxins of δ-endotoxin proteins such as Cry1Ab, Cry1Ac, Cry1F, Cry1Fa2, Cry2Ab, Cry3A, Cry3Bb1, Cry9C, Cry34Ab and Cry35Ab and insecticidal proteins such as VIP1, VIP2, VIP3 and VIP3A; partially deleted toxins; and modified toxins. Such hybrid toxins are produced from a new combination of the different domains of such proteins, by using a genetic engineering technique. As a partially deleted toxin, Cry1Ab comprising a deletion of a portion of an amino acid sequence has been known. A modified toxin is produced by substitution of one or more amino acids of natural toxins. Examples of such toxins and genetically engineered plants capable of synthesizing such toxins are described in EP-A-0 374 753, WO 93/07278, WO 95/34656, EP-A-0 427 529, EP-A-451 878, WO 03/052073 and so on. Toxins contained in such genetically engineered plants are able to confer resistance particularly to insect pests belonging to Coleoptera, Diptera and Lepidoptera, on the plants. Genetically engineered plants, which comprise one or multiple insecticidal pest-resistant genes and which express one or multiple toxins, have already been known, and some of such genetically engineered plants have already been on the market.

The above-mentioned crops include crops on which a capability of producing antipathogenic substances having selective action has been conferred by genetic engineering technology. A PR protein and the like have been known as such antipathogenic substances (PRPs, EP-A-0 392 225). Such antipathogenic substances and genetically engineered plants that generate them are described in EP-A-0 392 225, WO 95/33818, EP-A-0 353 191, etc.. Examples of such antipathogenic substances expressed in genetically engineered plants include: ion channel inhibitors such as a sodium channel inhibitor or a calcium channel inhibitor, among which KP1, KP4 and KP6 toxins produced by viruses have been known; stilbene synthase; bibenzyl synthase; chitinase; glucanase; a PR protein; and antipathogenic substances generated by microorganisms, such as a peptide antibiotic, an antibiotic having a hetero ring and a protein factor associated with resistance to plant diseases (which is called a plant disease-resistant gene and is described in WO 03/000906); and the like.

The above-mentioned crops include plants on which advantageous characters such as characters having enriched vitamin content have been conferred, or plants wherein an expression of allergen gene is suppressed, by genetically engineering technology.

Typical examples of the crops include Golden rice having enriched beta-carotene content in an edible part thereof (Science 287(5451): 303-305).

Stack varieties are also included in which a plurality of advantageous characters such as the classic herbicide characters mentioned above or herbicide tolerance genes, harmful insect resistance genes, antipathogenic substance producing genes, characters improved in oil stuff ingredients or characters having enriched amino acid content are combined.

The weeds which can be controlled by the method of the present invention include, for example:
*Echinochloa* weeds: for example, *Echinochloa crus-galli, Echinochloa oryzicola, Echinochloa crus-galli* var. *formosensis, Echinochloa colona, Echinochloa glabrescens, and Echinochloa oryzoides,*
*Leptochloa chinenisis,*
*Panicum dichotomiflorum, Cyperus difformis, Cyperus iria, Cyperus flaccidus, Cyperus microiria, Cyperus serotinus, Cyperus rotundus, Cyperus esculentus, Schoenoplectus juncoides, Schoenoplectus wallichii, Schoenoplectus mucronatus, Schoenoplectus nipponicus, Bolboschoenus koshevnikovii, Kyllinga gracillima, Eleocharis kuroguwai*, *Eleocharis acicularis, Fimbristylis miliacea, Fimbristylis dichotoma, Monochoria vaginalis, Monochoria korsakowii, Heteranthera limosa, Lindernia pocumbens, Lindernia dubia* subsp. *major, Lindernia dubia* subsp. *dubia*, *Bacopa rotundifolia, Dopatrium junceum, Gratiola japonica, Rotala indica, Ammannia multiflora*, *Ammannia coccinea, Ammannia auriculata, Elatine triandra, Sagittaria pygmaea, Sagittaria trifolia, Sagittaria montevidensis, Limnocharis flava, Alisma canaliculatum, Alisma plantago-aquatica, Potamogeton distinctus, Oenanthe javanica*, *Aeschynomene indica, Sesbania exaltata, Ludwigia prostrata, Ludwigia octovalvis, Bidens tripartita, Bidens frondosa, Eclipta thermalis, Eclipta alba, Sphenochlea zeylanica, Marsilea quadrifolia, Ipomoea lacunosa, Ipomoea triloba, Ipomoea hederacea, Ipomoea purpurea,* and *Ipomoea wrightii.*

The method of the present invention is especially effective for controlling *Echinochloa* weeds and *Leptochloa chinenisis.* An *Echinochloa* weed as used herein means a plant which is an annual plant or a perennial plant of *Echinochloa* and causes a weed problem in agricultural lands, or non-agricultural lands. Typical examples of *Echinochloa* weeds include *Echinochloa crus-galli, Echinochloa oryzicola, Echinochloa crus-galli* var. *formosensis, Echinochloa colona, Echinochloa glabrescens,* and *Echinochloa oryzoides,* which cause a weed problem in a paddy field.

### EXAMPLES

The following Examples including Formulation examples and Examples of the method of the present invention serve to illustrate the present invention in more detail, which should not intend to limit the present invention. In the Examples of the method of the present invention, the term "ha" means hectare (i.e. 10000 m²).

### Formulation example 1

The following ingredients are mixed, and then the mixture is ground by a wet grinding method to obtain a flowable.
Compound 1: 10 parts by weight
Polyoxyethylene sorbitan monooleate: 3 parts by weight Carboxymethyl cellulose: 3 parts by weight
Water: 84 parts by weight

### Formulation example 2

The following ingredients are mixed, and then the mixture is ground by a dry grinding method to obtain a wettable powder.
Compound 1: 10 parts by weight
Calcium lignosulfonate: 3 parts by weight
Sodium lauryl sulfate: 2 parts by weight
Synthetic silicon oxide hydrate: 85 parts by weight

### Formulation example 3

The following ingredients are mixed, and then the mixture is ground by a dry grinding method to obtain a wettable powder.
Compound 2: 10 parts by weight
Calcium lignosulfonate: 3 parts by weight
Sodium lauryl sulfate: 2 parts by weight
Synthetic silicon oxide hydrate: 85 parts by weight

### Formulation example 4

The following ingredients are mixed, and then the mixture is ground by a dry grinding method to obtain a wettable powder.
Compound 3: 10 parts by weight
Calcium lignosulfonate: 3 parts by weight
Sodium lauryl sulfate: 2 parts by weight
Synthetic silicon oxide hydrate: 85 parts by weight

### Formulation example 5

The following ingredients are mixed, and then the mixture is ground by a dry grinding method to obtain a wettable powder.
Compound 4: 10 parts by weight
Calcium lignosulfonate: 3 parts by weight
Sodium lauryl sulfate: 2 parts by weight
Synthetic silicon oxide hydrate: 85 parts by weight

In Examples of the method of the present invention, a criterion for evaluating a herbicidal effect is as follows.

The herbicidal effect is evaluated by rating on a score of 0 to 100 depending on a difference in the degree of germination or growth between the treated weeds and the untreated weeds, wherein "0" means that there was no or little difference in the degree of germination or growth of the treated weeds compared to the untreated weeds at the time of evaluation, and "100" means that the treated weeds died completely, alternatively their germination or growth was completely inhibited.

### Example 1

A 1/5000-are Wagner pot was filled with a paddy field soil, and then water was added thereto followed by soil puddling. After draining, a pre-germinated *Echinochloa oryzicola* was sown, and then grown in a glasshouse. Fourteen (14) days after the sowing when *Echinochloa oryzicola* had the 4th leaves, a water-diluted solution (134 ppm of Compound 1) of a flowable containing 10% Compound 1 was applied by spraying on the surface of the pot with a sprayer so that the amount of Compound 1 as listed in Table 1 was applied. When applying the water-diluted solution, the soil was well drained. The pot was flooded with water to a depth of 5 cm on the day of the application of the herbicide, the next day of the application of the herbicide, or 3 days after the application of the herbicide. And then, the plant was grown in the glasshouse. Four (4) weeks after the application of the herbicide, the herbicidal effect on *Echinochloa oryzicola* was evaluated. The results are shown in Table 1.

**[Table 1]**

| Treatment with Herbicide | Timing of Flooding after Treatment with Herbicide | Herbicidal effect on *Echinochloa oryzicola* |
|---|---|---|
| Without Treatment | Day of Treatment | 0 |
| | Next day of Treatment | 0 |
| | 3 days after Treatment | 0 |
| Treatment with Compound 1 (30 g/ha) | Day of Treatment | 96 |
| | Next day of Treatment | 97 |
| | 3 days after Treatment | 90 |

### Example 2

A 1/10000-are pot was filled with a paddy field soil, and then water was added thereto followed by soil puddling. After draining, a pre-germinated *Echinochloa oryzicola* was sown, and then grown in a glasshousee. Sixteen (16) days after the sowing when *Echinochloa oryzicola* had the 4th leaves, a water-diluted solution (112 ppm of Compound 1) of a flowable containing 10% Compound 1 was applied by spraying on the surface of the pot with a sprayer so that the amount of Compound 1 as listed in Table 2 was applied. When applying with the water-diluted solution, the soil was well drained. The pot was flooded with water to a depth of 5 cm on the day of the application of the herbicide, the next day of the application of the herbicide, or 3 days after the application of the herbicide. And then, the plant was grown in the glasshouse. Four (4) weeks after the application of the herbicide, the herbicidal effect on *Echinochloa oryzicola* was evaluated. The results are shown in Table 2.

**[Table 2]**

| Treatment with Herbicide | Timing of Flooding after Treatment with Herbicide | Herbicidal effect on *Echinochloa oryzicola* |
|---|---|---|
| Without Treatment | Day of Treatment | 0 |
| | Next day of Treatment | 0 |
| | 3 days after Treatment | 0 |
| Treatment with Compound 1 (25 g/ha) | Day of Treatment | 88 |
| | Next day of Treatment | 93 |
| | 3 days after Treatment | 85 |

### Example 3

A 1/10000-are pot was filled with a paddy field soil, and then water was added thereto followed by soil puddling. After draining, a pre-germinated *Echinochloa oryzicola* was sown, and then grown in a glasshouse. Sixteen (16) days after the sowing when *Echinochloa oryzicola* had the 4th leaves, each water-diluted solution containing 112 ppm of Compound 2 or Compound 3 was applied by spraying on the surface of the pot with a sprayer so that each amount of Compound 2 and Compound 3 as listed in Table 3 was applied. Each water-diluted solution of Compound 2 and Compound 3 was prepared by dissolving a given amount of Compound 2 or Compound 3 in acetone containing 2 % (w/v) of Tween 20, followed by diluting the resulting solution with water so that the concentration of acetone was 10 % by volume. When applying the water-diluted solution, the soil was well drained. The pot was flooded with water to a depth of 5 cm on the day of the application of the herbicide, the next day of the application of the herbicide, 3 days after the application of the herbicide, or 7 days after the application of the herbicide. And then, the plant was grown in the glasshouse.

Two (2) weeks after the application of the herbicide, the herbicidal effect on *Echinochloa oryzicola* was evaluated. The results are shown in Table 3.

**[Table 3]**

| Treatment with Herbicide | Timing of Flooding after Treatment with Herbicide | Herbicidal effect on *Echinochloa oryzicola* |
|---|---|---|
| Without Treatment | Day of Treatment | 0 |
| | Next day of Treatment | 0 |
| | 3 days after Treatment | 0 |
| | 7 days after Treatment | 0 |
| Treatment with Compound 2 (25 g/ha) | Day of Treatment | 89 |
| | Next day of Treatment | 92 |
| | 3 days after Treatment | 90 |
| | 7 days after Treatment | 80 |
| Treatment with Compound 3 (25 g/ha) | Day of Treatment | 83 |
| | Next day of Treatment | 83 |
| | 3 days after Treatment | 75 |
| | 7 days after Treatment | 75 |

### Example 4

A 1/5000-are Wagner pot is filled with a paddy field soil, and then water is added thereto followed by soil puddling. After draining, a pre-germinated *Echinochloa oryzicola* is sown, and then grown in a glasshouse. When *Echinochloa oryzicola* has the 4th or 5th leaves, Compound 2, Compound 3, or Compound 4 is applied by spraying on the surface of the pot with a sprayer. The pot is flooded with water to a depth of 4 cm on the day of the application of the herbicide, the next day of the application of the herbicide, or 3 days after the application of the herbicide.

The results show that the method of the present invention provides an excellent herbicidal effect on *Echinochloa oryzicola.*

### Example 5

A 1/10000-are Wagner pot was filled with a paddy field soil, and then water was added thereto followed by soil puddling. After draining, a pre-germinated *Leptochloa chinenisis* was sown, and then grown in a glasshouse. Sixteen (16) days after the sowing when *Leptochloa chinenisis* had the second or third leaves, each water-diluted solution containing 50 ppm of Compound 1, Compound 2, or Compound 3 was applied by spraying on the surface of the pot with a sprayer so that each amount of Compound 1, Compound 2, and Compound 3 as listed in Table 4 was applied. When applying the water-diluted solution, the pot was flooded to a depth of 0.5 cm. The pot was flooded with water to a depth of 4 cm or 2 cm on the next day of the application of the herbicide or 5 days after the application of the herbicide. And then, the plant was grown in the glasshouse.

Two (2) weeks after the application of the herbicide, the herbicidal effect on *Leptochloa chinenisis* was evaluated. The results are shown in Table 4.

**[Table 4]**

| Treatment with Herbicide | Timing of Flooding after Treatment with Herbicide | Depth of flooding | Herbicidal effect on *Leptochloa chinenisis* |
|---|---|---|---|
| Without Treatment | Next day of Treatment | 4 cm | 0 |
| | Next day of Treatment | 2 cm | 0 |
| | 5 days after Treatment | 4 cm | 0 |
| Treatment with Compound 1 (100 g/ha) | Next day of Treatment | 4 cm | 90 |
| | Next day of Treatment | 2 cm | 75 |
| | 5 days after Treatment | 4 cm | 75 |
| Treatment with Compound 2 (100 g/ha) | Next day of Treatment | 4 cm | 90 |
| | Next day of Treatment | 2 cm | 80 |
| | 5 days after Treatment | 4 cm | 80 |
| Treatment with Compound 3 (100 g/ha) | Next day of Treatment | 4 cm | 90 |
| | 5 days after Treatment | 4 cm | 60 |

### Example 6

A 1/5000-are Wagner pot is filled with a paddy field soil, and then water is added thereto followed by soil puddling. After draining, a pre-germinated *Leptochloa chinenisis* is sown, and then grown in a glasshouse. When *Leptochl oa chinenisis* has the first or second leaves, Compound 4 is applied by spraying on the surface of the pot with a sprayer. The pot is flooded with water to a depth of 4 cm on the day of the application of the herbicide, the next day of the application of the herbicide, or 3 days after the application of the herbicide.

The results show that the method of the present invention provides an excellent herbicidal effect on *Leptochloa chinenisis.*

### INDUSTRIAL APPLICABILITY

The method of the present invention has an excellent effect on controlling weeds in paddy rice cultivation.

## Claims

1. A method for controlling weeds in paddy rice cultivation, which comprises steps of:
after sowing paddy rice seeds or transplanting paddy rice plants in a paddy field, applying a water-diluted solution comprising one or more herbicidal compounds selected from the group consisting of
1-(2-chloro-6-propylimidazo[1,2-b]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide to the weeds or the paddy field where weeds grow or are to emerge; and
flooding the paddy field within the first week after the application of the herbicidal compound.

2. A method for controlling weeds in paddy rice cultivation, which comprises steps of:
after sowing paddy rice seeds or transplanting paddy rice plants in a paddy field, applying a water-diluted solution comprising one or more herbicidal compounds selected from the group consisting of
1-(2-chloro-6-propylimidazo[1,2-b]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide, to the weeds or the paddy field where weeds grow or are to emerge; and
flooding the paddy field until the first three days after the application of the herbicidal compound.

3. A method for controlling weeds in paddy rice cultivation, which comprises steps of:
after sowing paddy rice seeds or transplanting paddy rice plants in a paddy field, applying a water-diluted solution comprising one or more herbicidal compounds selected from the group consisting of
1-(2-chloro-6-propylimidazo[1,2-b]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide, to the weeds or the paddy field where weeds grow or are to emerge; and
flooding the paddy field until the next day of the application of the herbicidal compound.

4. The method according to any one of claims 1 to 3 wherein the herbicidal compound is 1-(2-chloro-6-propylimidazo[1,2-*b*]pyridazin-3-ylsulfonyl)-3-(4,6-dimethoxypyrimidin-2-yl)urea.

5. The method according to any one of claims 1 to 3 wherein the herbicidal compound is (*RS*)-2'-[(4,6-dimethoxypyrimidin-2-yl)(hydroxy)methyl]-1,1-difluoro-6'-(methoxymethyl)methanesulfonanilide.

6. The method according to any one of claims 1 to 3 wherein the herbicidal compound is 1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea.

7. The method according to any one of claims 1 to 3 wherein the herbicidal compound is 2'-[(4,6-dimethoxy-1,3,5-triazin-2-yl)carbonyl]-1,1,6'-trifluoro-*N-*methylmethanesulfonanilide.

8. The method according to any one of claims 1 to 7 wherein the paddy field is flooded to a depth of less than 1 cm in the step of applying a water-diluted solution comprising a herbicidal compound to the paddy field.

9. The method according to any one of claims 1 to 8 wherein the paddy field is flooded to a depth of 4 cm or more in the step of flooding the paddy field.

10. The method according to any one of claims 1 to 9 wherein the weeds in paddy rice cultivation are *Echinochloa* weeds.

11. The method according to any one of claims 1 to 9 wherein the weeds in paddy rice cultivation is *Leptochloa chinenisis.*

12. A formulation used in the method according to any one of claims 1 to 3 and 8 to 11, comprising one or more herbicidal compounds selected from the group consisting of
1-(2-chloro-6-propylimidazo[1,2-*b*]pyridazin-3-ylsulfonyl)-3-(4,6-dimethoxypyrimidin-2-yl)urea,
(*RS*)-2'-[(4,6-dimethoxypyrimidin-2-yl)(hydroxy)methyl]-1,1-difluoro-6'-(methoxymethyl)methanesulfonanilide,
1-{3-chloro-1-methyl-4-[(5*RS*)-5,6-dihydro-5-methyl-1,4,2-dioxazin-3-yl]pyrazol-5-ylsulfonyl}-3-(4,6-dimethoxypyrimidin-2-yl)urea, and
2'-[(4,6-dimethoxy-1,3,5-triazin-2-yl)carbonyl]-1,1,6'-trifluoro-*N*-methylmethanesulfonanilide.

13. The formulation according to claim 12 wherein the herbicidal compound is 1-(2-chloro-6-propylimidazo[1,2-b]pyridazin-3-ylsulfonyl)-3-(4,6-dimethoxypyrimidin-2-yl)urea.

14. The formulation according to claim 12 wherein the herbicidal compound is (*RS*)-2'-[(4,6-dimethoxypyrimidin-2-yl)(hydroxy)methyl]-1,1-difluoro-6'-(methoxymethyl)methanesulfonanilide.

15. The formulation according to claim 12 wherein the herbicidal compound is 1-{3-chloro-1-methyl-4-[(5*RS*)-5,6-dihydro-5-methyl-1,4,2-dioxazin-3-yl]pyrazo1-5-ylsulfonyl}-3-(4,6-dimethoxypyrimidin-2-yl)urea.

16. The formulation according to claim 12 wherein the herbicidal compound is 2'-[(4,6-dimethoxy-1,3,5-triazin-2-yl)carbonyl]-1,1,6'-trifluoro-*N*-methylmethanesulfonanilide.
